# EUROPEAN PATENT APPLICATION

(11) **EP 2 081 378 A1**
(43) Date of publication of application: **22.07.2009**
(21) Application number: 08000877.4
(22) Date of filing: 17.01.2008
(51) Int. Cl.: H04N 5/64

(54) **Flat screen assembly**

(71) Applicant: Shenzhen TCL New Technology Ltd., Nanshan District Shenzhen Guangdong 518067 (CN)
(72) Inventor: Bresteau, Eric, 49112 Pellouailles les Vignes (FR); Bertho, Dominique, 49320 Vauchretien (FR); Orcil, Bertrand, 49800 La Bohalle (FR)
(74) Representative: Frese-Göddeke, Beate

(57) **Abstract**

A known flat screen assembly comprises a flat screen panel, e.g. a LCD panel, a housing with at least a back cover and a front cover and with connection means comprising screws. To improve the aesthetical appearance of the assembly, especially to avoid an uneven surface of the front cover, the invention proposes to fix the screws directly or indirectly to a second sidewall (6) of the front cover.

## Description

### BACKGROUND OF THE INVENTION

### FIELD OF THE INVENTION

The present invention is related to a flat screen assembly according to the preamble of claim 1. Flat screen assemblies which comprise flat screens and housings are used for computers and TV apparatuses.

### DESCRIPTION OF THE PRIOR ART

A display apparatus with a display device and a cabinet, which comprises a rear part and a front part and also fastening means for fastening the front part to the rear part, is described by the WO 03/063476 A1. The fastening means of the cabinet comprises pairs of cooperating members of the front part and the rear part. At least one of the cooperating pairs has a resilient member, which is manually accessible and can be disengaged from its cooperating member. After being disengaged the front part and the rear part are separable. The cooperating members of at least one of the pairs are snap-ins. The display device is mounted in the cabinet and must be connected to the cabinet with additional connection means. As a result, numerous members, of the fastening means to fasten the cabinet itself, and of the connection means to fasten the display device into the cabinet, are necessary.

US 6,619,764 describes bosses of a front cabinet that are strengthened by boss reinforcing ribs, and a central part of a ceiling board for the front cabinet in the direction of the width is strengthened by a ceiling board reinforcing rib. The boss reinforcing ribs are formed with a high strength portion of greater thickness. The strength of the boss reinforcing rib is increased by making the boss reinforcing rib gradually lower in height as being closer to the front end. The casing is quite complicated and expensive to manufacture.

It is well known in the art to fix a back cover of a flat screen assembly to a front cover by screws, whereby the screws are screwed at a defined torque which is also determined by the mounting equipment. The result of this torque is a high axial tension in the screw and a torque in a receiving part for the screw. These forces are transmitted especially into the front cover resulting in aesthetical defects in the region of the screws like depressions in the surface. Especially if the front cover has a high gloss surface that defects disturb the impression and by that the value of the display device.

### SUMMARY OF THE INVENTION

It is therefore desirable to improve a flat screen assembly according to the preamble of claim 1, with respect to aesthetical aspects. Defects on the front cover resulting from forces caused by the screws should be avoided.

According to the invention this can be achieved by the features of claim 1.

A flat screen assembly of the invention comprises a flat screen panel and a housing with at least a back cover and a front cover and with connection means comprising screws. The screws are fixed directly or indirectly to a sidewall of the front cover. By that the forces of the screws are directed away from the front side, where aesthetical defects would disturb the most. Instead, the forces are lead tangentially to the side walls which under normal circumstances are not seen by the user. As the forces are lead tangentially to the side walls they are directed along the walls and will cause no or barely visible indentations. In all no aesthetical defects will occur on the most visible front side resulting in a high value appearance of the flat screen assembly.

In a preferred embodiment the screws are fixed to bosses extending from an inner side oft the sidewall. By that the screws are easy to fix because a head of the screw can be near to the outer surface of the back cover when assembled. For aesthetical reasons the head may be sunk for a few millimetres.

In an other preferred embodiment the bosses are formed in one part with the front cover. By that the production and the assembly of the housing is eased.

### BRIEF DESCRIPTION OF THE DRAWINGS

The invention will be explained in more detail using a preferred embodiment, which is illustrated in the drawings.

It shows:
Figure 1, a cut of a part of a flat screen assembly and
Figure 2, a perspective view of that part of figure 1 without a flat screen panel.

### DETAILED DESCRIPTION OF A PREFERRED EMBODIMENT OF THE INVENTION

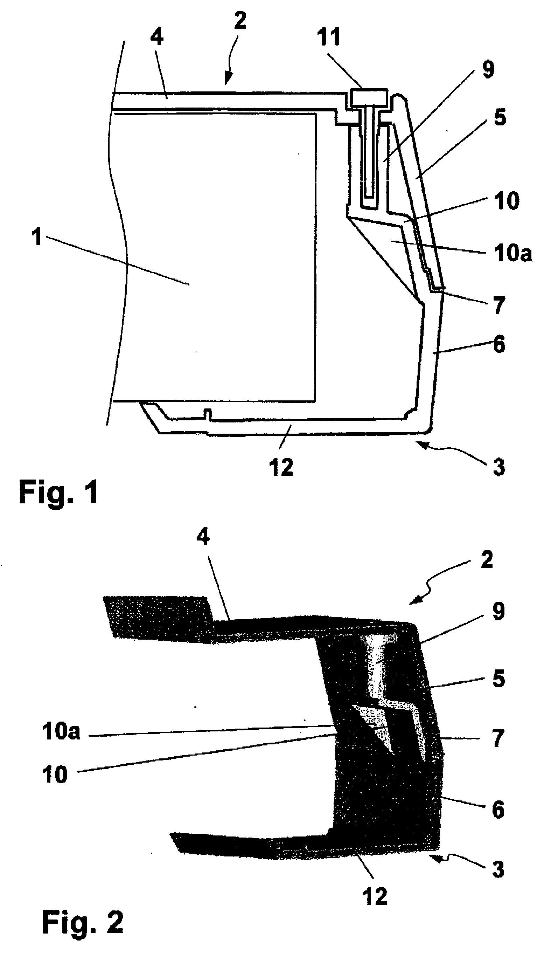

As seen in figures 1 and 2 a flat screen assembly of a preferred embodiment of the invention comprises a flat screen panel 1, for example a LCD panel, an OLED panel or a plasma panel, and a housing with at least a back cover 2 and a front cover 3. The arrangement of all three parts is seen in a partial view of a cross section.

The cavity-shaped back cover 2 comprises a bottom 4 and four first sidewalls 5. The bottom 4 covers the rear of the LCD panel 1 and some further components, which are arranged at the rear of the LCD panel 1. The front cover 3 is shaped like a frame with a front wall 12 and second sidewalls 6. An angle between the front wall 12 and the second sidewalls 6 is about 90°, preferably between 90° and 100°. An outer end 7 of the front cover 3 fits with the corresponding first sidewalls 5 of the back cover 2.

The back cover 2 is fixed to the front cover 3 by a plurality of screws 11. Each screw 11 is screwed into a bush- like part 9 of the front cover 3. Each part 9 is formed on an affiliated boss 10 and extends towards the bottom 4. All bosses 10 are formed at an end of an inner side of the second sidewalls 6 extending for a defined distance parallel to the corresponding first sidewall 5 of the back cover 2 and then inwards into the housing. Each boss 10 may include a rib 10a arranged between the parallel and the inward parts of the boss 10. The distance between two neighboured of the bosses 10 is chosen according to mechanical demands.

The front cover 3 and the bosses 10 including the parts 9 are manufactured in one piece.

Opposite to a free end of each part 9 a hole is provided in the back cover 2. The screw 11 penetrates the hole and presses the end of the bush 9 against the opposite part of the back cover 2. A head of the screw is hidden in a respective sunk of the back cover 2. No forces of the screws are lead to the front side 12.

## Claims

1. A flat screen assembly comprising
a flat screen panel (1) and
a housing with at least a back cover (2) and a front cover (3) and with screws (11) to connect the back cover (2) and the front cover (3),
**characterized in that** the screws (11) are fixed directly or indirectly to a second sidewall (6) of the front cover (3).

2. A flat screen assembly according to claim 1 **characterized in that** the screws (11) are fixed to bosses (10) extending from an inner side oft the second sidewall (6).

3. A flat screen assembly according to claim 1 **characterized in that** the bosses (10) are formed in one part with the front cover (3).

## Amended claims

### Amended claims in accordance with Rule 137(2) EPC.

**1.** A flat screen assembly comprising
a flat screen panel (1) and
a housing with at least a front cover (3) comprising second side walls (6) and a back cover (2) and with screws (11) to connect the back cover (2) and the front cover (3) ,
**characterized in that** the screws (11) are fixed directly or indirectly only to the second sidewalls (6) of the front cover (3).

**2.** A flat screen assembly according to claim 1 **characterized in that** the screws (11) are fixed to bosses (10) extending from an inner side oft the second sidewall (6).

**3.** A flat screen assembly according to claim 2 **characterized in that** the bosses (10) are formed in one part with the front cover (3).
